# FASCICULE DE BREVET EUROPEEN

(11) **EP 3 007 976 B1**
(45) Date de publication et mention de la délivrance du brevet: **10.08.2022**
(21) Numéro de dépôt: 14736655.3
(22) Date de dépôt: 13.06.2014
(51) Int. Cl.: B64D 25/14

(54) **PROCÉDÉ D'ARMEMENT / DÉSARMEMENT DE TOBOGGAN DE PORTE D'AVION ET MÉCANISME DE MISE EN OEUVRE**
VERFAHREN ZUM SICHERN UND ENTSICHERN EINER AUFBLASBAREN NOTRUTSCHE UND MECHANISMUS ZUR DURCHFÜHRUNG DES VERFAHRENS
METHOD FOR ARMING AND DISARMING AN EMERGENCY EVACUATION SLIDE AND MECHANISM FOR CARRYING OUT THE METHOD

(30) Priorité: 14.06.2013 FR 1355563
(43) Date de publication de la demande: 20.04.2016
(73) Titulaire: Latecoere, 31500 Toulouse (FR)
(72) Inventeur: BESSETTES, Cyrille, F-31660 Buzet sur Tarn (FR); BUCHET, Damien, F-31500 Toulouse (FR); OTHOMENE, Renaud, F-31500 Toulouse (FR)
(74) Mandataire: Junca, Eric
(86) Numéro de dépôt international: PCT/EP2014/062482
(87) Numéro de publication internationale: WO 2014/198952

(56) Documents cités:
- EP-A1- 0 743 246
- US-A- 5 400 985
- US-A1- 2009 020 648

## Description

### DOMAINE TECHNIQUE

L'invention se rapporte à un procédé d'armement / désarmement de toboggan de porte d'avion en liaison avec le plancher de cabine de l'avion, ainsi qu'à un mécanisme de mise en œuvre d'un tel procédé.

De manière générale, dans les avions de ligne, les portes sont équipées d'un toboggan gonflable de sortie d'urgence des passagers, par exemple lors d'un atterrissage imprévu. Le plancher de cabine de ces avions est en effet trop haut pour permettre aux passagers et à l'équipage de sauter de l'appareil sans s'exposer à de graves blessures.

La mise en place d'un toboggan se déroule globalement en trois étapes :
- commande d'armement de toboggan sur la porte, commande qui accroche une barre d'accrochage (« girt bar » en terminologie anglaise ou barre de ralingue) de l'extrémité supérieure du toboggan dans des ferrures intégrées au plancher de la cabine ;
- ouverture d'urgence de la porte par l'actionnement de la poignée intérieure de la porte, qui déclenche son ouverture automatique et libère le toboggan dégonflé qui tombe hors de la cabine ; et
- gonflage du toboggan déclenché par effet Venturi grâce à la pression d'azote fournie par un réservoir prévu a cet effet : le toboggan se déploie, sa partie inférieure vient au contact du sol hors de l'avion et les occupants empruntent alors le toboggan pour quitter l'avion sans danger.

Une commande permet d'armer ou de désarmer le toboggan et un indicateur visuel permet à l'opérateur de connaître le statut d'armement de chaque toboggan à tout instant. Ainsi, l'opérateur actionne la commande avant le décollage pour vérifier le bon fonctionnement du changement de statut de la porte qui passe du statut « désarmement » ou DISARM - où le toboggan n'est pas libérable - au statut « armement » ou ARM qui permet de libérer le toboggan si nécessaire.

### ÉTAT DE LA TECHNIQUE

La commande d'ARM/DISARM correspond à deux positions d'une poignée dédiée qui indiquent également visuellement le statut de la porte. Un indicateur lumineux peut venir confirmer ce statut à tout instant.

En position désarmée, le toboggan est attaché sous forme de tube enveloppant la barre d'accrochage et est stocké dans un coffre fixé sur la paroi interne de la porte, le coffre étant agencé en bas de porte ou dans le fuselage, sous le seuil de porte, dans certaines installations. La barre d'accrochage est maintenue parallèlement au plancher de la cabine par des pinces en « U » muni de clips libérables formés de lame à ressort ou équivalent. Lorsque la poignée est amenée en position d'armement ARM de la porte, le mouvement de rotation de la poignée est transformé en mouvement de translation verticale par câblage mécanique - par exemple par des câbles « push-pull » - pour verrouiller des poignées solidaires de la barre sur des mâchoires de ferrures intégrées sous le seuil du plancher. Inversement, le décrochement de la barre est obtenu par un mécanisme de détente des mâchoires actionné par exemple par un câble relié à une poignée annexe. Un indicateur visuel, renforcé par un indicateur sonore, avertit l'opérateur que le toboggan de la porte qu'il tente d'ouvrir est armé.

Ce type de solution a été décrit dans de nombreux documents de brevets, tels que par exemple US 3 634 914, US 4 715 562, EP 0743246, WO 8400786 ou US2009/020648.

Des perfectionnements ont été proposés afin de prendre en compte des aspects particuliers dans le contexte périlleux d'ouverture d'urgence d'une porte de cabine. Par exemple, pour empêcher le déploiement intempestif du toboggan, il est prévu dans le document de brevet US 2011/0139934 des capteurs de présence humaine en face de la porte de cabine, en liaison avec un avertisseur d'une telle présence à proximité de la poignée interne de la porte.

Un autre exemple, évoqué dans le document US 7090168, concerne la charge supportée par la barre d'accrochage attachée en ses extrémités lorsque le toboggan est déployé et gonflé. Afin d'éviter la formation d'un moment de flexion au centre de la barre, qui peut provoquer sa rupture, des panneaux souples superposés sont prévus de sorte à créer une répartition des forces à partir de points de connexion sur la barre d'accrochage ou sur les ferrures du plancher de cabine.

Cependant, la barre d'accrochage et les câbles de verrouillage d'une telle barre présentent de nombreux inconvénients :
- la barre possède un poids non négligeable et forme un obstacle à franchir avant de sauter sur le toboggan ;
- l'ancrage des ferrures sous le seuil du plancher accumule les poussières et autres « détritus » (terre, petits objets,...), ce qui encrasse la mécanique et peut empêcher le bon déploiement du toboggan ;
- les câbles de transmission peuvent se bloquer ou se casser du fait de la complexité du système;
- la difficulté de désarmer avec des conditions climatiques difficiles : givre, gel, neige, corrosion, grippage, etc.;
- la poignée d'ARM/DISARM qui, lorsqu'elle n'est pas équipée d'un dispositif de mise sous tension de type « snap », peut se positionner de manière intermédiaire entre les deux positions de commande ;
- la difficulté de démontage d'un toboggan pour le remonter sur une autre porte en cas d'amerrissage.

### EXPOSÉ DE L'INVENTION

L'invention vise à s'affranchir de ces inconvénients en découplant l'aspect commande et information de l'aspect activation, et en supprimant la barre d'accrochage remplacée par une liaison du toboggan en des points d'accrochage. Ces points d'accrochage se déplacent alors par commande électrique pour venir s'agripper de manière réversible à des ferrures fixes et sans ancrage. Le mécanisme d'entraînement des points d'accrochage se trouve alors totalement du côté de la porte, bien protégé des agressions environnementales.

L'invention a pour objet un ensemble de porte d'avion, de toboggan de porte d'avion, de plancher de cabine d'avion et de mécanisme d'armement/désarmement du toboggan en liaison avec le plancher de cabine de l'avion, l'ensemble comportant deux connecteurs libérables disposés de chaque côté du bas de porte et composés chacun de deux demi-connecteurs coaxiaux selon un axe perpendiculaire au plancher, un demi-connecteur dit supérieur solidaire de la porte et présentant des moyens d'accrochage au toboggan, un demi-connecteur dit inférieur fixé sur le plancher de cabine, ainsi que d'un grappin de verrouillage/déverrouillage du demi-connecteur supérieur sur le demi-connecteur inférieur, chaque grappin comportant une pièce mobile en rotation selon l'axe des demi-connecteurs et apte à être logée dans le demi-connecteur inférieur correspondant, le mécanisme comportant également une source d'énergie couplée à deux bielles, chaque bielle étant apte à pouvoir se déplacer en translation parallèlement au plancher par la source d'énergie pour entraîner en rotation la pièce mobile de chaque grappin entre deux positions angulaires :
- une position de verrouillage angulaire de conformation bloquante des parois d'une base du demi-connecteur inférieur correspondant, et
- une position angulaire libérable de conformation complémentaire des parois de ladite pièce et de ladite base.

Des modes de réalisation préférés sont identifiés dans les revendications dépendantes 2-13.

L'invention se rapporte également à un procédé d'armement/désarmement de toboggan selon la revendication 14 avec des modes de mise en oeuvre particuliers du procédé identifiés dans les revendications dépendantes 15-17.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue frontale partiellement arrachée d'une porte d'avion-à partir de l'intérieur de l'avion - équipée d'un exemple de mécanisme d'armement/désarmement selon l'invention ;
- la figure 2, une vue latérale de la porte et d'un des connecteurs libérables du mécanisme de la figure 1 ;
- la figure 3, une vue en coupe du connecteur selon la figure 2 ;
- les figures 4a et 4b, une vue en coupe et une vue partiellement éclatée du demi-connecteur supérieur de l'exemple de connecteur selon l'invention en liaison avec une bielle d'entraînement et des capteurs de position ;
- les figures 5a à 5c, des vues en perspective, en coupe et éclatée d'un exemple de grappin de demi-connecteur selon l'invention ;
- les figures 6a à 6c, deux vues latérales et une vue supérieure d'un exemple de ferrure seuil selon l'invention ;
- les figures 7a et 7b, des vues supérieures d'un des connecteurs (en coupe partielle) et une du mécanisme d'armement/désarmement selon l'invention en position de désarmement DISARM, et
- les figures 8a et 8b, les vues supérieures en coupe partielle du connecteur et du mécanisme d'armement/désarmement selon les figures 7a et 7b en position d'armement ARM.

### DESCRIPTION DETAILLÉE

Dans tout le texte, les termes «supérieur» et « inférieur », ainsi que « vertical » et « horizontal » et leurs dérivés, se rapportent à des localisations d'éléments ou de parties d'éléments positionnés par rapport au niveau de la surface d'atterrissage ou d'amerrissage au sens large (sol ou eau) considérée comme un plan horizontal de référence.

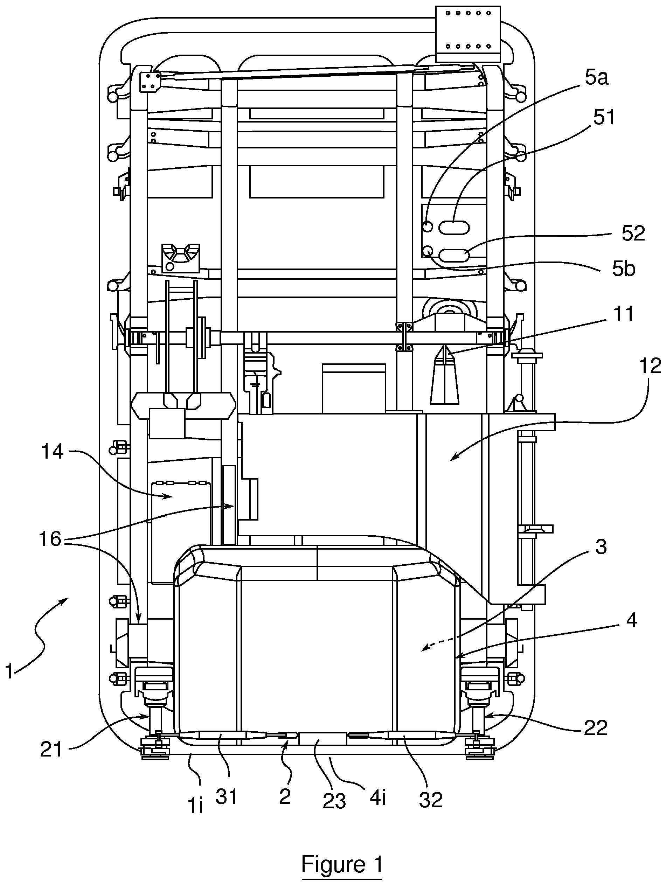

En référence à la figure 1, une vue frontale partiellement arrachée d'une porte d'avion 1 à partir de l'intérieur de l'avion est illustrée. Cette porte 1 est la porte d'entrée/sortie avant habituelle des passagers. Elle est équipée notamment d'une poignée de levage / descente 11, d'un bras 12 d'ouverture de la porte 1 afin de permettre l'accès ou la sortie des passagers et d'un mécanisme d'armement/désarmement 2 selon l'invention.

Ce mécanisme d'armement / désarmement 2 permet d'utiliser un toboggan 3 stocké dans le coffre 4 formé en bas de porte 1 dans les cas d'urgence qui nécessitent l'évacuation des occupants de l'avion. Le fonctionnement de ce mécanisme 2 est déclenché par appui des boutons de commande DISARM 51 ou ARM 52. Des diodes lumineuses 5a et 5b sont disposées en regard des boutons 51 et 52 pour signaler l'état respectivement armé ou désarmé du mécanisme. Alternativement, des boutons rétro-éclairés ou équivalents peuvent remplacer les diodes.

La face inférieure 4i du coffre 4 est située sensiblement au même niveau que la face inférieure 1i de la structure de la porte. Le mécanisme 2 comporte deux connecteurs libérables 21 et 22 disposés de chaque côté du bas de porte. Chaque connecteur 21, 22, est composé de deux demi-connecteurs, un demi-connecteur dit supérieur 21s, 22s fixé à une structure de renfort 16 de la porte 1, et un demi-connecteur dit inférieur 21i, 22i. Chaque demi-connecteur inférieur 21i, 22i est formé d'une ferrure, dite ferrure, seuil fixée sur le plancher de cabine 6. Sur la figure 1, la porte 1 est descendue en positon fermée et les demi-connecteurs 21s et 22s sont engagés sur les ferrures seuil 21i et 22i. Dans les figures où un seul connecteur 21 ou un demi-connecteur 21i, 21s est représenté, la description vaut pour l'autre connecteur 22 ou un demi-connecteur 22i, 22s.

Le mécanisme 2 comporte également un moteur électrique bistable 23, de type solénoïde, piloté par un calculateur de porte 14 et actionné par les boutons de commande 51 et 52. Le moteur 23 est couplé à deux bielles 31 et 32, chaque bielle entraînant en rotation respectivement un demi-connecteur supérieur 21, 22s entre une position de verrouillage dite d'armement ou ARM et une position libérable dite de désarmement ou DISARM qui seront détaillées ci-après.

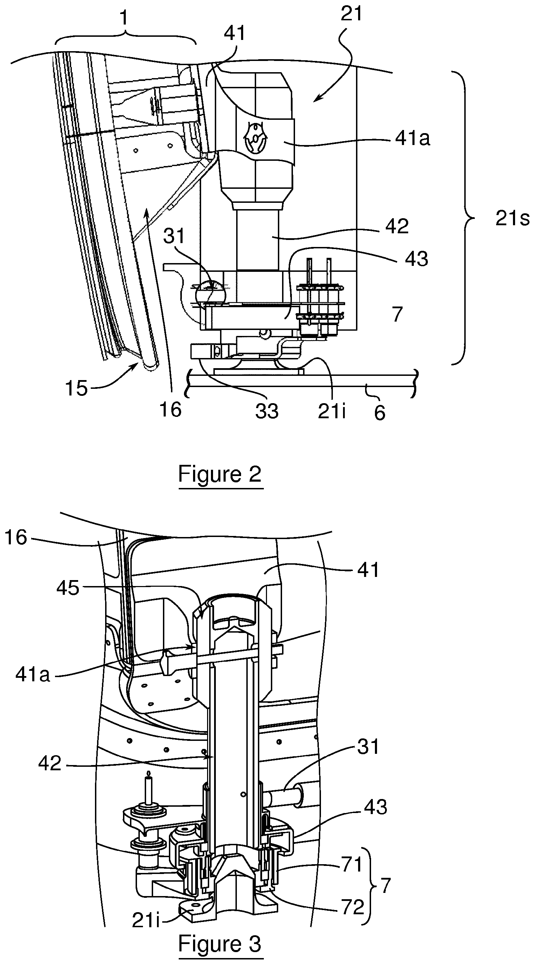

La figure 2 illustre une vue latérale de la porte 1 et du connecteur libérable 21, la figure 3 offrant une vue en coupe du connecteur 21. La porte 1 se compose d'un panneau 15 et d'une structure de renfort 16 dans laquelle sont logés notamment les équipements de commande, d'actionnement et de gestion de la porte 1.

Le demi-connecteur supérieur 21s présente des broches d'accrochage 33 pour le toboggan 3 stocké dans le coffre 4 et un bras de fixation 41 au coffre 4. Ce demi-connecteur 21s de type femelle est couplé à une ferrure seuil 21i de type mâle, fixée sur le plancher de cabine 6 pour former le connecteur libérable 21 comme expliqué ci-après.

Le demi-connecteur supérieur 21s comporte une chandelle 42 montée verticalement et perpendiculairement au plancher 6 par le bras de fixation 41, une bague de commande 43 mobile en rotation montée sur la chandelle 42 et reliée à la bielle d'entraînement 31, et un grappin de verrouillage/déverrouillage 7 également monté sur la chandelle 42.

Sur la vue en coupe de la figure 3, on distingue plus précisément le joint 45 en matériau élastique - par exemple en silicone - de montage de la chandelle 42 dans le support annulaire 41a du bras de fixation 41. Ce joint élastique 45 est destiné à absorber les désalignements entre les demi-connecteurs, par exemple lors de leur connexion pendant la descente de la porte en position fermée ou lors des déplacements relatifs en vol entre la porte et le fuselage.

Sur cette vue en coupe de la figure 3, apparaît également une pièce mobile 72, interne au grappin 7, qui est couplée à la bague de commande mobile 43 pour être entraînée en rotation comme cela sera décrit ci-dessous.

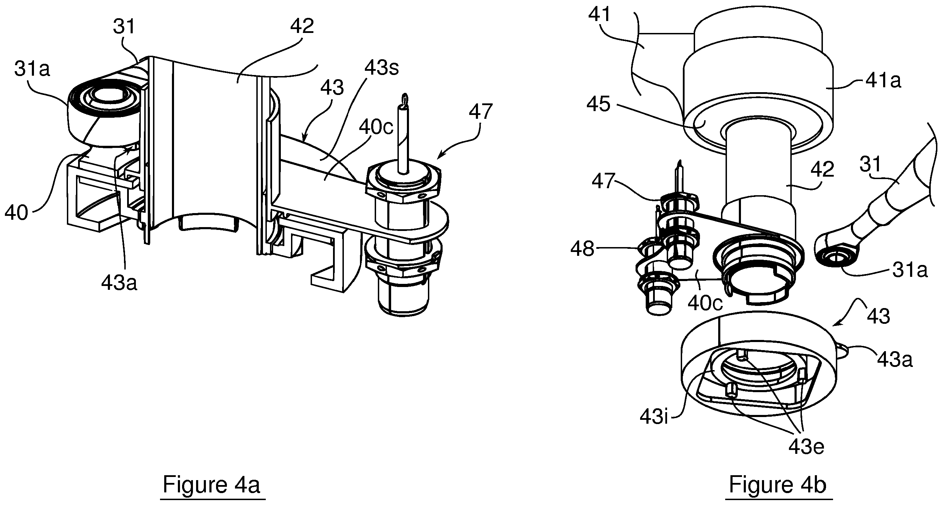

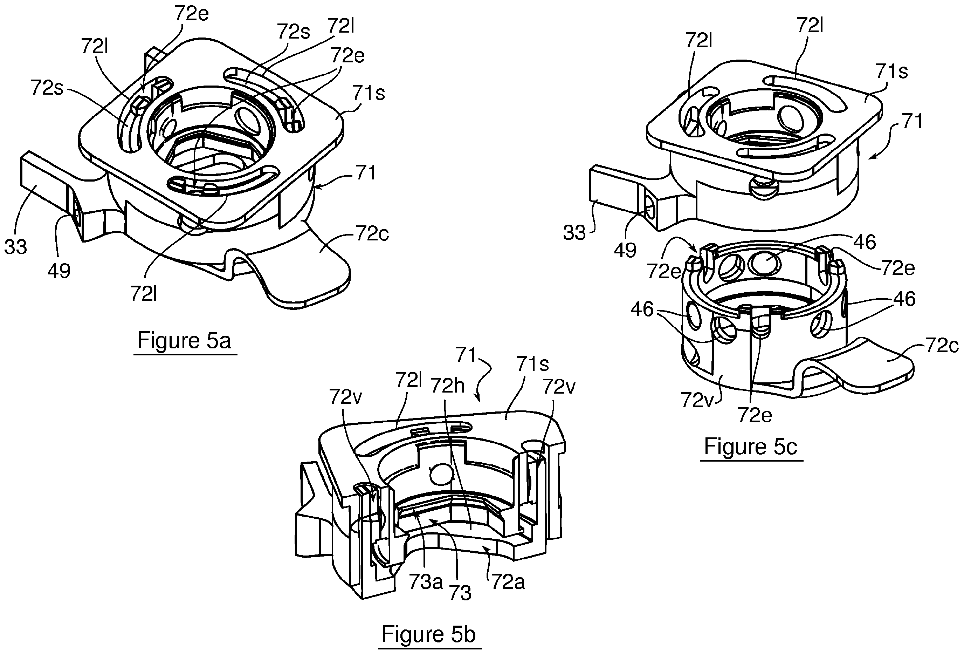

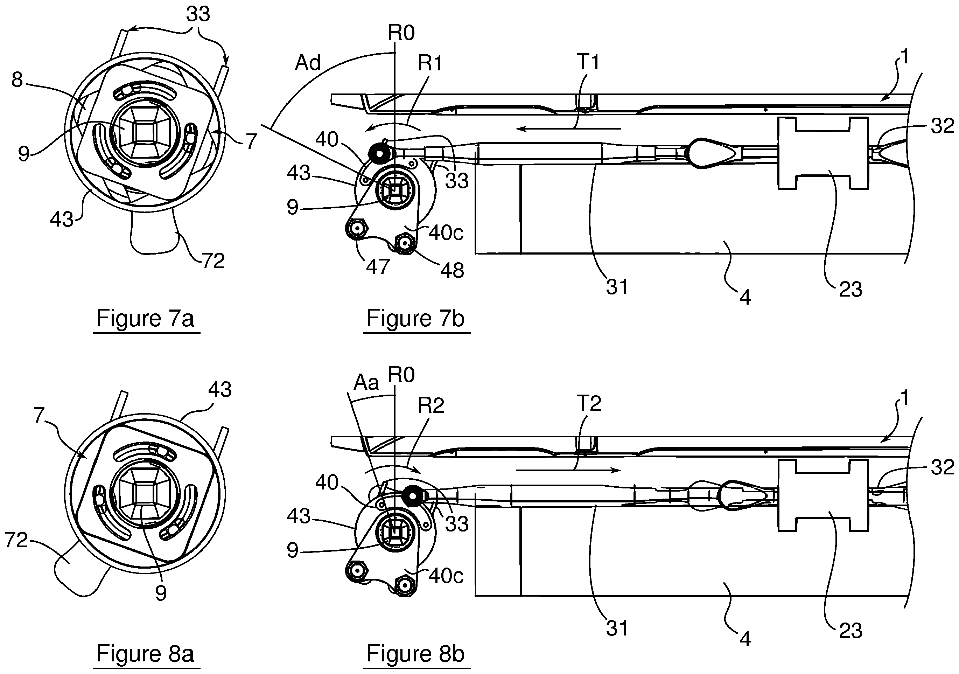

En référence aux vues en coupe et partiellement éclatée du demi-connecteur supérieur 21 sur les figures 4a et 4b, des capteurs de position 47 et 48 sont avantageusement montés sur la chandelle 42 du demi-connecteur supérieur 21s via un support 40c. Ces capteurs 47 et 48 associés à une cible 72c présente sur le grappin 7 (voir figure 5c) permettent de suivre le déplacement du grappin, de s'assurer de son bon fonctionnement, de déterminer la position angulaire de la bague 43 (cf. figures 7a et 7b), et d'en déduire l'état d'armement/désarmement du toboggan.

Par ailleurs, ces vues montrent le couplage de la bielle d'entraînement 31 sur la bague mobile 43 par un embout annulaire 31a formé à l'extrémité de la bielle 31 en liaison avec un ergot 43a venant d'une embase 40 fixée sur la face supérieure 43s de la bague 43. La figure 4b illustre également la présence de trois ergots 43e formés sur une face inférieure 43i de la bague de commande 43, ces ergots étant destinés à être couplés à la pièce mobile interne 72 d'un grappin 7.

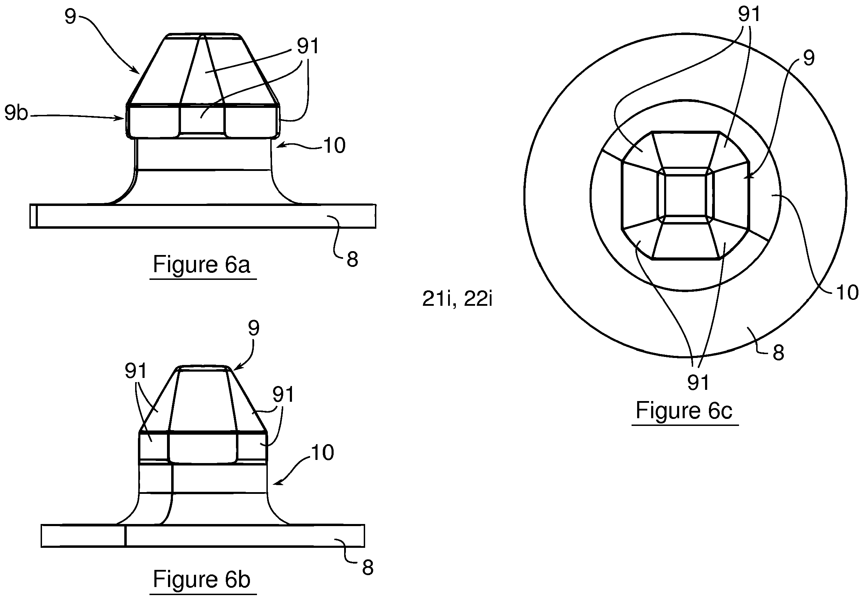

Le grappin 7 est maintenant détaillé avec les vues respectivement en perspective, en coupe et éclatée des figures 5a à 5c. Le grappin 7 se compose d'un carter externe 71 et de la pièce mobile interne 72. Le carter externe 71 possède des broches 33 d'accrochage pour le toboggan ainsi que, avantageusement, une paroi interne 73 présentant un alésage central 73a cylindrique de centrage de la ferrure seuil 21i (cf. figures 6a à 6c).

De plus, un système d'indexation de la position de la pièce mobile 72 est avantageusement prévu : ce système d'indexation connu est monté ici dans un logement 49 formé dans le carter 71 à la naissance d'une broche 33 dans l'exemple illustré. Le système d'indexation fonctionne en liaison avec un repère en creux 46 formé dans une paroi annulaire verticale 72v de la pièce 72.

Une fois montée, la paroi annulaire verticale 72v est intégrée dans un interstice correspondant du carter 71. Cette paroi annulaire 72v présente sur sa face supérieure 72s trois encoches renforcées 72e, chacune de ces encoches pouvant accueillir un ergot 43e formé sur la face inférieure 43i de la bague de commande 43 (cf. figure 4b). Chaque ergot peut alors se déplacer le long d'une lumière circulaire 72l pratiquée sur la face supérieure 71s du carter 71.

La paroi annulaire 72v de la pièce mobile 72 est prolongée sur sa partie inférieure par une paroi horizontale 72h. Cette paroi horizontale 72h possède un alésage central 72a de conformation adaptée à la conformation de la ferrure seuil afin de définir des positions de verrouillage et libérable comme cela sera détaillé ci-après.

De plus, la pièce mobile 72 est pourvue d'une cible 72c pour les capteurs de position 47, 48 du grappin (cf. figures 4a et 4b). La cible 72c forme une tirette qui peut être manœuvrée manuellement pour armer ou désarmer la porte en cas de panne du moteur électrique.

Les vues latérales et la vue supérieure des figures 6a à 6c illustrent une ferrure seuil 21i du connecteur 21 (cf. figures 2 et 3) aptes à se connecter au demi-connecteur supérieur 21s décrit ci-dessus. Cette ferrure seuil 21i comporte un socle 8 destiné à être fixé sur le plancher de cabine 6 (cf. figure 1) , le socle 8 reposant sur ce plancher 6 de sorte qu'aucune cavité ne se forme entre le socle 8 et le seuil.

La ferrure seuil 21i présente une extrémité dite supérieure 9 de forme globalement conique pourvue de quatre épaulements 91 qui s'étendent radialement et se prolongent sur une base cylindrique 9b. Entre cette base cylindrique 9b et le socle 8, s'étend axialement une portion intermédiaire cylindrique 10 radialement rétrécie par rapport aux épaulements 91. Cette portion intermédiaire rétrécie 10 sert de logement à la paroi horizontale 72h de l'alésage 72a de la pièce mobile 72 (cf. figure 5b): la conformation de cette paroi 72h est complémentaire de celle de la base cylindrique 9b de sorte que :
- selon certaines positions angulaires de la pièce 72, la paroi 72h de cette pièce est en correspondance avec celle de la base 9b - positions libérables pour la pièce 72 et donc pour le grappin 7 - et, une fois la pièce 72 au niveau de la portion intermédiaire 10,
- des rotations de +/- 45° de la pièce mobile 72 à partir des positions précédentes bloquent cette pièce entre les épaulements 91 de la base 9b et le socle 8 de la ferrure seuil 21i : le grappin 7 est alors verrouillé sur la ferrure seuil (positions de verrouillage).

Les vues supérieures des figures 7a et 7b illustrent le connecteur 21 (en coupe partielle) et le mécanisme d'armement/désarmement 2 vers la position de désarmement DISARM. Pour atteindre ce mode, le moteur 23 est actionné par la commande 51 et le calculateur de porte 14 (figure 1) de sorte que le déplacement en translation T1 des bielles d'entraînement 31 et 32 fait pivoter en rotation R1 la bague de commande 43 selon un angle de désarmement Ad (par rapport à une référence R₀) pour lequel les grappins 7 ne sont pas dans un positionnement bloquant sur la ferrure seuil 21i. Dans cette position, les grappins 7 et donc les connexions 21, 22 sont libérés : la porte peut être levée pour désaccoupler les connexions puis ouverte avec le bras 12 (figure 1) dans les conditions nominales.

Afin de positionner le mécanisme 2 en mode armement ARM, une cinématique inverse - translation inverse des bielles 31, 32 entraînant une rotation inverse de la bague de commande 43 - est déclenchée par la commande 51 du moteur 23 et le calculateur de porte 14 (figure1).

En référence aux figures 8a et 8b, qui reprennent les vues supérieures des figures 7a et 7b en position ARM. Dans ce mode, la porte 1 est en position fermée et les grappins 7 sont verrouillés dans un positionnement angulaire bloquant sur les ferrures seuil 21i par rotation de la bague de commande 43 selon un angle d'armement i. Pour ce faire, les bielles 31, 32 sont actionnées selon une cinématique de blocage déclenchée par la commande 52 et le calculateur de porte 14 (figure 1) via le moteur électrique 23.

Par cette cinématique, le déplacement en translation T2 des bielles d'entraînement 31 et 32 font pivoter en rotation R2 la bague de commande 43 selon l'angle Aa : les connecteurs 21, 22 sont verrouillés et le levage puis l'ouverture de la porte provoque le déroulement et le gonflage du toboggan 3 (figure 1).

l'entraînement en rotation fait pivoter un sous-ensemble mobile de l'une des parties de chaque connexion entre deux positions extrêmes, une position de verrouillage dans laquelle le sous-ensemble est agencé dans un logement de l'autre partie selon une conformation bloquante et une position libérable dans laquelle le sous-ensemble et le logement présentent des conformations complémentaires.

L'invention n'est pas limitée aux exemples de réalisation décrits et représentés.

## Revendications

1. Ensemble de porte d'avion (1), de toboggan (3) de porte d'avion, de plancher de cabine d'avion (6) et de mécanisme d'armement / désarmement du toboggan (3) en liaison avec le plancher de cabine de l'avion (6), **caractérisé en ce qu'**il comporte deux connecteurs libérables (21, 22) disposés de chaque côté du bas (1i) de porte (1) et composés chacun de deux demi-connecteurs (21s, 22s ; 21i, 22i) coaxiaux selon un axe perpendiculaire au plancher, un demi-connecteur dit supérieur (21s, 22s) solidaire de la porte (1) et présentant des moyens d'accrochage (33) au toboggan (3), un demi-connecteur dit inférieur (21i, 22i) fixé sur le plancher de cabine (6), ainsi que d'un grappin de verrouillage/déverrouillage (7) du demi-connecteur supérieur (21s, 22s) sur le demi-connecteur inférieur (21i, 22i), **en ce que** chaque grappin (7) comporte une pièce mobile (72) en rotation selon l'axe des demi-connecteurs (21s, 22s; 21i, 22i) et apte à être logée dans le demi-connecteur inférieur correspondant (21i, 22i), et **en ce que** le mécanisme (2) comporte également une source d'énergie (23) couplée à deux bielles (31, 32), chaque bielle (31, 32) étant apte à pouvoir se déplacer en translation parallèlement au plancher par la source d'énergie (23) pour entraîner en rotation (R1, R2) la pièce mobile (72) de chaque grappin (7) entre deux positions angulaires :
- une position de verrouillage angulaire (Aa) de conformation bloquante des parois (91) d'une base (9b) du demi-connecteur inférieur correspondant (21i, 22i), et
- une position angulaire libérable (Ad) de conformation complémentaire des parois (72a, 91) de ladite pièce (72) et de ladite base (9b).

2. Ensemble selon la revendication précédente, dans lequel chaque demi-connecteur inférieur (21i, 22i) est une ferrure seuil qui comporte un socle (8) apte à être fixé sur le plancher (6), le socle (8) reposant sur ce plancher (6) de sorte qu'aucune cavité ne se forme entre le socle (8) et le plancher (6).

3. Ensemble selon la revendication précédente, dans lequel chaque demi-connecteur inférieur (21i, 22i) présente une extrémité dite supérieure (9) de forme globalement conique pourvue de parois formant des épaulements (91) qui s'étendent radialement pour former la base (9b) et, entre l'extrémité supérieure (9) et le socle (8), une portion intermédiaire cylindrique (10) radialement rétrécie par rapport aux épaulements (91) et apte à former, avec l'extrémité supérieure (9), un logement pour la pièce mobile (72) du grappin correspondant (7).

4. Ensemble selon l'une quelconque des revendications précédentes, dans lequel chaque demi-connecteur supérieur (21s, 22s) comporte une chandelle (42) apte à être montée perpendiculairement au plancher (6) dans un bras de fixation (41, 41a) à la porte (1), une bague de commande (43) mobile en rotation montée sur la chandelle (42) et reliée à une bielle d'entraînement (31, 32), et chaque grappin de verrouillage/déverrouillage (7) également monté sur la chandelle (42), se compose d'un carter (71) et de la pièce mobile (72) dite pièce interne, apte à être entraînée par la bielle (31, 32) via la bague de commande (43).

5. Ensemble selon la revendication précédente, dans lequel la pièce mobile interne (72) et la bague de commande (43) sont couplées via des liaisons par ergots (43e) et encoches (72e).

6. Ensemble selon l'une quelconque des revendications 4 ou 5, dans lequel la chandelle (42) est montée dans le bras (41, 41a) à travers un joint élastique (45) apte à absorber les désalignements entre les deux demi-connecteurs (21s, 21i ; 22s, 22i).

7. Ensemble selon l'une quelconque des revendications 4 à 6, dans lequel des capteurs de position (47, 48) sont montés sur la bague de commande mobile (43) afin de déterminer la position angulaire (Aa, Ad) de ladite bague (43) et d'en déduire la position des grappins (7) ainsi que l'état d'armement/désarmement du toboggan (3).

8. Ensemble selon l'une quelconque des revendications 4 à 7, dans lequel le carter (71) du grappin (7) présente des broches (33) servant de moyens d'accrochage du toboggan (3).

9. Ensemble selon l'une quelconque des revendications 4 à 8, dans lequel le carter (71) du grappin (7) présente une paroi interne (73) cylindrique formant une face de centrage (73a) de la ferrure seuil (21i, 22i).

10. Ensemble selon la revendication 7, dans lequel chaque pièce mobile interne (72) est pourvue d'une cible (72c) pour les capteurs de position (47, 48) du grappin (7).

11. Ensemble selon la revendication précédente, dans lequel la cible (72c) des pièces internes mobiles (72) forme une tirette apte à être manœuvrée pour armer ou désarmer le toboggan (3) en cas de panne d'un moteur électrique (23) utilisé comme source d'énergie.

12. Ensemble selon la revendication précédente, dans lequel le moteur (23) est un actuateur électrique bistable, de type solénoïde.

13. Ensemble selon l'une quelconque des revendications précédentes, dans lequel un indicateur lumineux (5a, 5b) informant l'opérateur du statut d'armement/désarmement de la porte, et un calculateur de porte (14) gère les opérations d'armement/désarmement, en particulier des positions angulaires d'armement/désarmement (Aa, Ad) des demi-connecteurs supérieurs (21s, 22s).

14. Procédé d'armement / désarmement de toboggan (3) d'un ensemble selon l'une quelconque des revendications précédentes, consistant - en mode armement dit ARM - à descendre la porte (1) en position fermée pour engager les demi-connecteurs (21s, 21i; 22s, 22i) formant les connexions libérables (21,22) coaxiales selon un axe perpendiculaire au plancher de cabine (6), les demi-connecteurs (21s, 21i ; 22s, 22i) de chaque connexion (21,22) étant respectivement solidaires de la porte (1) et du plancher de cabine (6), à verrouiller les connexions (21,22) par un entraînement selon une cinématique de blocage (T1, R1) déclenchée par une commande (51) de source d'énergie (23), ladite cinématique de blocage se composant d'un entraînement en rotation (R2) autour de l'axe de chaque connexion (21, 22) induit par un entraînement en translation (T2) par couplage avec la source d'énergie (23) jusqu'à atteindre une conformation bloquante des connexions (21, 22), à dérouler et gonfler en cas de sortie d'urgence le toboggan (3) uniquement accroché à chaque connexion (21i, 22i), et - en mode désarmement dit DISARM-à déverrouiller lesdites connexions par un entraînement mécanique de cinématique inverse (T1, R1), puis à lever la porte (1) pour désaccoupler les connexions (21, 22) avant de procéder à son ouverture.

15. Procédé d'armement / désarmement selon la revendication 14, dans lequel les parties de connexion (21i, 22i) solidaires du plancher de cabine (6) forment des avancées émergeant à partir du plancher (6).

16. Procédé d'armement / désarmement selon l'une des revendications 14 ou 15, dans lequel les parties de connexion (21s, 21i ; 22s, 22i) sont alignées lors de la descente de la porte (1) par une fixation des parties de connexion (21s, 22s) solidaires de la porte (1) via une jonction élastique (45).

17. 17 Procédé d'armement / désarmement selon l'une quelconque des revendications 14 à 16, dans lequel l'entraînement en rotation (R1, R2) fait pivoter un sous-ensemble mobile (72) de l'une des parties (21s, 22s) de chaque connexion (21, 22) entre deux positions angulaires (Ad, Aa), une position de verrouillage dans laquelle le sous-ensemble (72) est agencé dans un logement (10) de l'autre partie (21i, 22i) selon une conformation bloquante et une position libérable dans laquelle le sous-ensemble (72) et le logement (10) présentent des conformations complémentaires.

## Patentansprüche

1. Anordnung aus einer Flugzeugtür (1), einer Flugzeugtür-Notrutsche (3), einem Flugzeugkabinenboden (6) und einem Mechanismus zum Scharfschalten / Entschärfen der Notrutsche (3) in Verbindung mit dem Kabinenboden des Flugzeugs (6), **dadurch gekennzeichnet, dass** sie zwei lösbare Verbinder (21, 22) umfasst, die beiderseits des Unterteils (1i) der Tür (1) angeordnet sind und jeweils aus zwei Verbinderhälften (21s, 22s; 21i, 22i) bestehen, die koaxial entlang einer zum Boden senkrechten Achse sind, einer sogenannten oberen Verbinderhälfte (21s, 22s), die mit der Tür (1) fest verbunden ist und Mittel zum Anhängen (33) an der Notrutsche (3) aufweist, einer sogenannten unteren Verbinderhälfte (21i, 22i), die am Kabinenboden (6) befestigt ist, sowie aus einem Greifer zur Verriegelung/Entriegelung (7) der oberen Verbinderhälfte (21s, 22s) auf der unteren Verbinderhälfte (21i, 22i), dadurch, dass jeder Greifer (7) ein Teil (72) umfasst, das entlang der Achse der Verbinderhälften (21s, 22s; 21i, 22i) drehbeweglich ist und geeignet ist, in der entsprechenden unteren Verbinderhälfte (21i, 22i) aufgenommen zu werden, und dadurch, dass der Mechanismus (2) außerdem eine Energiequelle (23) umfasst, die mit zwei Schubstangen (31, 32) gekoppelt ist, wobei jede Schubstange (31, 32) geeignet ist, sich durch die Energiequelle (23) parallel zum Boden translatorisch zu bewegen, um das bewegliche Teil (72) jedes Greifers (7) zwischen zwei Winkelpositionen drehend anzutreiben (R1, R2):
- einer Winkelposition der Verriegelung (Aa) mit einer blockierenden Konfiguration der Wände (91) eines Basisteils (9b) der entsprechenden unteren Verbinderhälfte (21i, 22i), und
- einer lösbaren Winkelposition (Ad) mit einer komplementären Konfiguration der Wände (72a, 91) des Teils (72) und des Basisteils (9b).

2. Anordnung nach dem vorhergehenden Anspruch, wobei jede untere Verbinderhälfte (21i, 22i) ein Schwellenbeschlag ist, welcher einen Sockel (8) umfasst, der geeignet ist, auf dem Boden (6) befestigt zu werden, wobei der Sockel (8) so auf diesem Boden (6) ruht, dass sich kein Hohlraum zwischen dem Sockel (8) und dem Boden (6) bildet.

3. Anordnung nach dem vorhergehenden Anspruch, wobei jede untere Verbinderhälfte (21i, 22i) ein sogenanntes oberes Ende (9) mit einer im Wesentlichen konischen Form aufweist, das mit Wänden versehen ist, die Schultern (91) bilden, welche sich radial erstrecken, um den Basisteil (9b) zu bilden, und, zwischen dem oberen Ende (9) und dem Sockel (8), einen zylindrischen Zwischenabschnitt (10), der bezüglich der Schultern (91) radial verjüngt ist und geeignet ist, mit dem oberen Ende (9) eine Aufnahme für das bewegliche Teil (72) des entsprechenden Greifers (7) zu bilden.

4. Anordnung nach einem der vorhergehenden Ansprüche, wobei jede obere Verbinderhälfte (21s, 22s) ein Stützrohr (42), das senkrecht zum Boden (6) in einem Arm zur Befestigung (41, 41a) an der Tür (1) anbringbar ist, und einen drehbeweglichen Steuerring (43), der auf dem Stützrohr (42) angebracht ist und mit einer Antriebsschubstange (31, 32) verbunden ist, umfasst, und jeder Greifer zur Verriegelung/Entriegelung (7), der ebenfalls auf dem Stützrohr (42) angebracht ist, aus einem Gehäuse (71) und dem beweglichen Teil (72), dem sogenannten inneren Teil, das durch die Schubstange (31, 32) über den Steuerring (43) antreibbar ist, besteht.

5. Anordnung nach dem vorhergehenden Anspruch, wobei das innere bewegliche Teil (72) und der Steuerring (43) über Verbindungen durch Vorsprünge (43e) und Aussparungen (72e) gekoppelt sind.

6. Anordnung nach einem der Ansprüche 4 oder 5, wobei das Stützrohr (42) in dem Arm (41, 41a) durch eine elastische Dichtung (45) hindurch angebracht ist, die geeignet ist, die Fehlausrichtungen zwischen den zwei Verbinderhälften (21s, 21i; 22s, 22i) zu kompensieren.

7. Anordnung nach einem der Ansprüche 4 bis 6, wobei Positionssensoren (47, 48) an dem beweglichen Steuerring (43) angebracht sind, um die Winkelposition (Aa, Ad) des Ringes (43) zu bestimmen und daraus die Position der Greifer (7) sowie den Scharfschaltungs-/Entschärfungszustand der Notrutsche (3) abzuleiten.

8. Anordnung nach einem der Ansprüche 4 bis 7, wobei das Gehäuse (71) des Greifers (7) Stifte (33) aufweist, die als Mittel zum Anhängen der Notrutsch (3) dienen.

9. Anordnung nach einem der Ansprüche 4 bis 8, wobei das Gehäuse (71) des Greifers (7) eine zylindrische Innenwand (73) aufweist, die eine Zentrierfläche (73a) für den Schwellenbeschlag (21i, 22i) bildet.

10. Anordnung nach Anspruch 7, wobei jedes innere bewegliche Teil (72) mit einem Zielobjekt (72c) für die Positionssensoren (47, 48) des Greifers (7) versehen ist.

11. Anordnung nach dem vorhergehenden Anspruch, wobei das Zielobjekt (72c) der beweglichen inneren Teile (72) eine Zuglasche bildet, die betätigbar ist, um die Notrutsche (3) im Fall einer Störung eines als Energiequelle verwendeten Elektromotors (23) scharfzuschalten oder zu entschärfen.

12. Anordnung nach dem vorhergehenden Anspruch, wobei der Motor (23) ein bistabiler elektrischer Stellantrieb vom Typ eines Elektromagneten ist.

13. Anordnung nach einem der vorhergehenden Ansprüche, wobei eine Leuchtanzeige (5a, 5b) den Bediener über den Scharfschaltungs-/Entschärfungszustand der Tür informiert und ein Türrechner (14) die Scharfschaltungs-/Entschärfungsvorgänge, insbesondere Scharfschaltungs-/Entschärfungs-Winkelpositionen (Aa, Ad) der oberen Verbinderhälften (21s, 22s), verwaltet.

14. Verfahren zum Scharfschalten / Entschärfen einer Notrutsche (3) einer Anordnung nach einem der vorhergehenden Ansprüche, welches darin besteht, im Scharfschaltungsmodus, mit ARM bezeichnet, die Tür (1) in die geschlossene Position abzusenken, um die Verbinderhälften (21s, 21i; 22s, 22i) in Eingriff zu bringen, die lösbare Verbindungen (21, 22) bilden, die koaxial entlang einer zum Kabinenboden (6) senkrechten Achse sind, wobei die Verbinderhälften (21s, 21i; 22s, 22i) jeder Verbindung (21, 22) mit der Tür (1) bzw. dem Kabinenboden (6) fest verbunden sind, die Verbindungen (21, 22) durch einen Antrieb gemäß einer Blockierkinematik (T1, R1) zu verriegeln, die durch eine Steuerung (51) einer Energiequelle (23) ausgelöst wird, wobei die Blockierkinematik aus einem Drehantrieb (R2) um die Achse jeder Verbindung (21, 22) besteht, der durch einen translatorischen Antrieb (T2) durch Kopplung mit der Energiequelle (23) hervorgerufen wird, bis eine blockierende Konfiguration der Verbindungen (21, 22) erreicht wird, und im Fall einer Notevakuierung die Notrutsche (3), die ausschließlich an jeder Verbindung (21i, 22i) angehängt ist, abzuwickeln und aufzublasen, und im Entschärfungsmodus, mit DISARM bezeichnet, die Verbindungen durch einen mechanischen Antrieb mit umgekehrter Kinematik (T1, R1) zu entriegeln und dann die Tür (1) zu heben, um die Verbindungen (21, 22) zu entkoppeln, bevor ihre Öffnung vorgenommen wird.

15. Verfahren zum Scharfschalten / Entschärfen nach Anspruch 14, wobei die Verbindungsteile (21i, 22i), die mit dem Kabinenboden (6) fest verbunden sind, Vorsprünge bilden, die aus dem Boden (6) herausragen.

16. Verfahren zum Scharfschalten / Entschärfen nach einem der Ansprüche 14 oder 15, wobei die Verbindungsteile (21s, 21i; 22s, 22i) beim Absenken der Tür (1) durch eine Befestigung der mit der Tür (1) fest verbundenen Verbindungsteile (21s, 22s) über eine elastische Verbindung (45) ausgerichtet werden.

17. Verfahren zum Scharfschalten / Entschärfen nach einem der Ansprüche 14 bis 16, wobei der Drehantrieb (R1, R2) ein Schwenken einer beweglichen Untereinheit (72) eines der Teile (21s, 22s) jeder Verbindung (21, 22) zwischen zwei Winkelpositionen (Ad, Aa) bewirkt, einer Verriegelungsposition, in welcher die Untereinheit (72) in einer Aufnahme (10) des anderen Teils (21i, 22i) gemäß einer blockierenden Konfiguration aufgenommen ist, und einer lösbaren Position, in welcher die Untereinheit (72) und die Aufnahme (10) komplementäre Konfigurationen aufweisen.

## Claims

1. Assembly consisting of an aircraft door (1), an aircraft door evacuation slide (3), an aircraft cabin floor (6) and a mechanism for arming/disarming the evacuation slide (3) connected to the cabin floor (6) of the aircraft, **characterized in that** it includes two releasable connectors (21, 22) disposed on respective opposite sides of the bottom (1i) of the door (1) and each composed of two half-connectors (21s, 22s; 21i, 22i) coaxial with an axis perpendicular to the floor, a so-called upper half-connector (21s, 22s) rigidly connected to the door (1) and having means (33) of attachment to the evacuation slide (3), a so-called lower half-connector (21i, 22i) fixed to the cabin floor (6), as well as a latch for locking/unlocking (7) the upper half-connector (21s, 22s) and the lower half-connector (21i, 22i), **in that** each latch (7) includes a part (72) mobile in rotation about the axis of the half-connectors (21s, 22s; 21i, 22i) and adapted to be housed in the corresponding lower half-connector (21i, 22i), and **in that** the mechanism (2) also includes an energy source (23) coupled to two links (31, 32), each link (31, 32) being adapted to be able to be moved in translation parallel to the floor by the energy source (23) to drive the mobile part (72) of each latch (7) in rotation (R1, R2) between two angular positions:
- an angular position (Aa) locking the locking configuration of the walls (91) of a base (9b) of the corresponding lower half-connector (21i, 22i), and
- a releasable angular position (Ad) of complementary configuration of the walls (72a, 91) of said part (72) and said base (9b).

2. Assembly according to the preceding claim, wherein each lower half-connector (21i, 22i) is a threshold fitting that includes a base (8) adapted to be fixed to the floor (6), the base (8) resting on this floor (6) so that no cavity is formed between the base (8) and the floor (6).

3. Assembly according to the preceding claim, wherein each lower half-connector (21i, 22i) has a so-called upper end (9) of globally conical shape having walls forming shoulders (91) that extend radially to form the base (9b) and, between the upper end (9) and the base (8), a cylindrical intermediate portion (10) radially smaller than the shoulders (91) and adapted to form with the upper end (9) a housing for the mobile part (72) of the corresponding latch (7).

4. Assembly according to any one of the preceding claims, wherein each upper half-connector (21s, 22s) includes a pillar (42) adapted to be mounted perpendicularly to the floor (6) in an arm (41, 41a) for fixing it to the door (1) and a control ring (43) mobile in rotation mounted on the pillar (42) and connected to a driving link (31, 32), and each locking/unlocking latch (7), also mounted on the pillar (42), consists of a casing (71) and the so-called mobile internal part (72) adapted to be driven by the link (31, 32) via the control ring (43).

5. Assembly according to the preceding claim, wherein the mobile internal part (72) and the control ring (43) are coupled via connections by lugs (43e) and notches (72e) .

6. Assembly according to either one of claims 4 or 5, wherein the pillar (42) is mounted in the arm (41, 41a) via an elastic joint (45) adapted to absorb misalignments between the two half-connectors (21s, 21i; 22s, 22i).

7. Assembly according to any one of Claims 4 to 6, wherein position sensors (47, 48) are mounted on the mobile control ring (43) in order to determine the angular position (Aa, Ad) of said ring (43) and to deduce therefrom the position of the latches (7) and the armed/disarmed status of the evacuation slide (3).

8. Assembly according to any one of Claims 4 to 7, wherein the casing (71) of the latch (7) includes pins (33) for attaching the evacuation slide (3).

9. Assembly according to any one of Claims 4 to 8, wherein the casing (71) of the latch (7) includes a cylindrical internal wall (73) forming a face (73a) for centring the threshold fitting (21i, 22i).

10. Assembly according to Claim 7, wherein each mobile internal part (72) is provided with a target (72c) for the position sensors (47, 48) of the latch (7).

11. Assembly according to the preceding claim, wherein the target (72c) of the mobile internal parts (72) forms a pull-tab that can be manoeuvred to arm or disarm the evacuation slide (3) in the event of failure of an electric motor (23) used as an energy source.

12. Assembly according to the preceding claim, wherein the motor (23) is a bistable electrical actuator of solenoid type.

13. Assembly according to any one of the preceding claims, wherein an indicator lamp (5a, 5b) informing the operator of the armed/disarmed status of the door and a door computer (14) manage the arming/disarming operations, in particular the arming/disarming angular positions (Aa, Ad) of the upper half-connectors (21s, 22s).

14. Method for arming/disarming an evacuation slide (3) of an assembly according to any one of the preceding claims, consisting - in a so-called arming mode (ARM)-in lowering the door (1) into a closed position to engage the half-connectors (21s, 21i; 22s, 22i) forming the releasable connections (21, 22) coaxial with an axis perpendicular to the cabin floor (6), the half-connectors (21s, 21i, 22s, 22i) of each connection (21, 22) being rigidly connected to the door (1) and to the cabin floor (6), respectively, locking the connections (21, 22) by driving in accordance with a locking motion (T1, R1) triggered by a control (51) of an energy source (23), said locking motion consisting in driving in rotation (R2) about the axis of each connection (21, 22) induced by driving in translation (T2) by coupling with the energy source (23) until a configuration is reached locking the connections (21, 22), in the event of an emergency evacuation, unfurling and inflating the evacuation slide (3) attached only to each connection (21i, 22i), and - in a so-called disarming mode (DISARM) - unlocking said connections by a mechanically driven reverse motion (T1, R1) and then raising the door (1) to decouple the connections (21, 22) before opening it.

15. Arming/disarming method according to Claim 14, wherein the connecting parts (21i, 22i) rigidly connected to the cabin floor (6) form extensions emerging from the floor (6).

16. Arming/disarming method according to either one of Claims 14 or 15, wherein the connecting parts (21s, 21i; 22s, 22i) are aligned during the lowering of the door (1) by fixing the connecting parts (21s, 22s) rigidly connected to the door (1) via an elastic joint (45).

17. Arming/disarming method according to any one of Claims 14 to 16, wherein the driving in rotation (R1, R2) causes pivoting of a mobile subassembly (72) of one of the parts (21s, 22s) of each connection (21, 22) between two angular positions (Ad, Aa), a locking position in which the subassembly (72) is arranged in a housing (10) of the other part (21i, 22i) in accordance with a locking configuration and a releasable position in which the subassembly (72) and the housing (10) have complementary configurations.
